# FASCICULE DE BREVET EUROPEEN

(11) **EP 3 130 536 B1**
(45) Date de publication et mention de la délivrance du brevet: **04.10.2017**
(21) Numéro de dépôt: 16183269.6
(22) Date de dépôt: 08.08.2016
(51) Int. Cl.: B64C 25/50, F16H 55/28, F16H 25/20

(54) **ATTERRISSEUR D'AERONEF MUNI D'UNE COMMANDE D'ORIENTATION DES ROUES DU TYPE A PIGNON-CREMAILLIERE**
FAHRWERK EINES LUFTFAHRZEUGS, DAS MIT EINER ORIENTIERUNGSSTEUERUNG DER RÄDER VOM TYP RITZEL-ZAHNSTANGEN-ANTRIEB AUSGESTATTET IST
AIRCRAFT LANDING GEAR PROVIDED WITH A RACK-AND-PINION CONTROL FOR STEERING THE WHEELS

(30) Priorité: 10.08.2015 FR 1557648
(43) Date de publication de la demande: 15.02.2017
(73) Titulaire: Safran Landing Systems, 78140 Vélizy-Villacoublay (FR)
(72) Inventeur: QUENERCH`DU, Marc, 78140 VELIZY-VILLACOUBLAY (FR); EUZET, Bertrand, 78140 VELIZY-VILLACOUBLAY (FR)
(74) Mandataire: Lavialle, Bruno François Stéphane

(56) Documents cités:
- EP-A1- 2 620 673
- EP-A2- 2 527 689
- GB-A- 876 313

## Description

L'invention est relative à un atterrisseur d'aéronef muni d'une commande d'orientation des roues de l'atterrisseur du type à pignon-crémaillère.

### ARRIERE-PLAN TECHNOLOGIQUE DE L'INVENTION

On connaît des atterrisseurs d'aéronef comportant un caisson articulé sur la structure de l'aéronef, et recevant une tige coulissante équipée à sa partie inférieure un essieu qui porte les roues de l'atterrisseur. Certains atterrisseurs sont munis d'une commande d'orientation pour orienter les roues de l'atterrisseur. Ces commandes d'orientation comportent un organe monté tournant sur le caisson (comme un collier, ou un tube tournant) qui est relié à la tige coulissante par un compas autorisant le libre coulissement de la tige, mais solidarisant en rotation la tige coulissante à l'organe tournant. La position angulaire de ce dernier vis-à-vis du caisson est déterminée par un actionneur d'orientation.

Sur certains aéronefs, comme par exemple l'Airbus A320, l'actionneur d'orientation comporte une crémaillère montée coulissante dans des cylindres qui s'étendent de part et d'autre du caisson, et qui engrène avec une portion dentée de l'organe tournant formant pignon. La crémaillère peut être déplacée de façon hydraulique, comme sur l'A320, ou encore au moyen d'un actionneur électromécanique linéaire, comme proposé dans les documents EP 2 620 673 ou EP 2 527 689.

Ces commandes d'orientation sont soumises à de fortes déformations au niveau de l'engrènement entre le pignon et la crémaillère, ce qui rend l'utilisation d'une transmission du type à vis à billes délicat, compte-tenu de la rigidité de ce genre d'actionnement.

### OBJET DE L'INVENTION

L'invention vise à proposer un atterrisseur muni d'une commande d'orientation à crémaillère compatible avec une transmission rigide du type vis à billes.

### PRESENTATION DE L'INVENTION

En vue de la réalisation de ce but, on propose un atterrisseur comportant un caisson dans lequel une tige portant à sa partie inférieure une ou des roues est montée pour coulisser en étant libre de tourner autour d'un axe de pivotement, l'atterrisseur comportant une commande d'orientation pour orienter sélectivement la ou les roues en faisant pivoter la tige coulissante, la commande d'orientation comportant un organe tournant monté tournant sur le caisson qui comporte un secteur denté formant pignon et qui est lié en rotation à la tige coulissante, ainsi qu'une crémaillère montée coulissante sur le caisson selon un axe de coulissement perpendiculaire à l'axe de pivotement pour engrener avec le pignon, la crémaillère étant déplacée par des moyens de déplacement comportant un moteur. Selon l'invention, les moyens de déplacement comportent un entraîneur rotatif s'étendant à l'intérieur de la crémaillère pour tourner autour de l'axe de coulissement et coopérer par une liaison hélicoïdale avec la crémaillère, l'entraîneur rotatif étant arrêté axialement par deux butées axiales opposées autorisant un déversement angulaire de l'entraîneur rotatif, les butées étant portées par au moins un support allongé s'étendant à l'intérieur de la crémaillère et ayant une extrémité proximale fixée à une extrémité d'un cylindre dans lequel coulisse la crémaillère.

Ainsi, l'entraîneur rotatif est libre de déverser angulairement et peut donc suivre la crémaillère dans ses déformations angulaires. Par ailleurs, grâce à la souplesse en flexion du support allongé, l'entraîneur rotatif peut également suivre la crémaillère dans ses mouvements transverses. En outre, si les butées axiales sont munies de butées à éléments roulants (aiguilles, rouleaux) elles sont ainsi libres de glisser relativement au plan d'appui des éléments roulants, ce qui permet à l'entraîneur de suivre encore mieux la crémaillère.

Il reste alors à commander la rotation de l'entraîneur rotatif par la transmission d'un mouvement de rotation d'un moteur au moyen d'une transmission adaptée à suivre les déplacements de l'entraîneur rotatif, par exemple au moyen d'un arbre long flexible avec un entraînement à cannelures bombées.

Ainsi, la position relative entre le tube de la crémaillère et l'entraîneur rotatif est très peu contrainte et devient donc compatible avec une liaison hélicoïdale rigide du type à billes.

Selon un aspect particulier de l'invention, la liaison entre la crémaillère et l'entraîneur rotatif est du type hélicoïdal à billes et comporte deux ensembles de billes séparés au niveau d'une partie centrale de l'entraîneur rotatif. En effet, cette partie centrale correspond à la zone en engrènement avec la crémaillère, et est donc fortement sollicitée. Le fait de ne pas faire circuler de billes dans cette zone évite toute surcontrainte des chemins de billes due aux déformations d'engrènement.

Selon un autre aspect particulier de l'invention, la liaison entre la crémaillère et l'entraîneur rotatif est du type hélicoïdal à billes, la crémaillère ayant un chemin de billes creusé plus profondément au niveau d'une portion du chemin de billes en regard de la zone d'engrènement. Le creusement permet d'aménager un jeu dans le chemin de billes permettant d'absorber les déformations d'engrènement et ainsi d'éviter toute surcontrainte des billes présentes dans la portion creusée du chemin.

### PRESENTATION DES FIGURES

L'invention sera mieux comprise à la lumière de la description détaillée qui suit en référence aux figures des dessins annexés, parmi lesquelles :

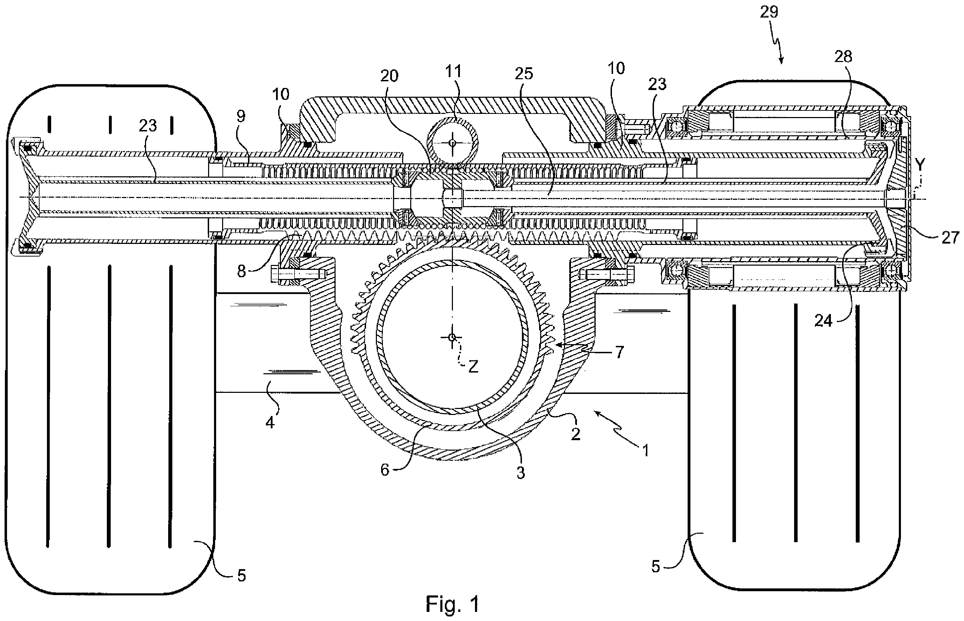

- La figure 1 est une vue en coupe d'un atterrisseur selon l'invention selon un plan passant par l'axe de coulissement de la crémaillère ;
- La figure 2 est une vue de détail de l'atterrisseur de la figure 1, montrant un entraîneur rotatif à deux ensembles de billes ;
- La figure 3 est une coupe selon un plan passant par l'axe de coulissement de la tige coulissante d'un entraîneur rotatif, avec un chemin de billes creusé.

### DESCRIPTION DETAILLEE DE MODES DE REALISATIONS PARTICULIERS DE L'INVENTION

L'invention s'applique à un atterrisseur 1 d'aéronef dont on aperçoit ici le caisson 2 en coupe. Une tige coulissante 3 est montée à coulissement à l'intérieur du caisson 2, selon un axe longitudinal Z (ici vu en bout). La tige coulissante 3 porte à son extrémité inférieure un essieu 4 qui porte ici deux roues 5. La tige coulissante 3 est libre de pivoter autour de l'axe Z (qui est donc également un axe de pivotement de la tige coulissante). L'atterrisseur est équipé d'une commande d'orientation pour commander le pivotement de la tige coulissante 3, et donc l'orientation des roues 5.

La commande d'orientation comporte un tube tournant 6 monté tournant dans le caisson 2 coaxialement à la tige coulissante 3, en étant relié à celle-ci par un compas (non représenté) qui solidarise en rotation le tube tournant 6 à la tige coulissante 3, tout en permettant le libre coulissement de la tige coulissante 3. Le tube tournant 6 comporte un secteur denté formant pignon 7. Le pignon 7 engrène avec une crémaillère 8 portée par un tube 9 monté coulissant selon un axe de coulissement Y perpendiculaire à l'axe Z dans un cylindre transverse composé ici de deux demi-cylindres 10 vissés sur le caisson 2. Un galet de réaction 11 est monté tournant sur le caisson 2 à l'opposé de la zone d'engrènement pour contrer la tendance au fléchissement du tube de crémaillère 9 sous les efforts d'engrènement.

L'intérieur du tube de crémaillère 9 est conformé en chemin de billes hélicoïdal pour coopérer avec des billes portées par un entraîneur rotatif 20 qui s'étend à l'intérieur du tube de crémaillère 9 (qui forme alors un écrou). Ici, la recirculation des billes est organisée sur l'entraîneur rotatif, par exemple au moyen d'une recirculation filet par filet.

L'entraîneur rotatif est maintenu axialement en position par deux butées axiales rotulaires 21 opposées qui coopèrent avec l'entraîneur rotatif 20 par des surfaces sphériques. Les butées axiales 21 sont portées, par l'intermédiaire de butées à aiguilles 22, à l'extrémité distale de supports allongés 23 qui s'étendent de part et d'autre de l'entraîneur rotatif 20 à l'intérieur du tube de crémaillère 9. Les extrémités proximales 24 des supports allongés 23 sont fixées aux extrémités des demi-cylindres 10.

L'entraîneur rotatif 20 est ainsi axialement positionné de sorte que sa partie centrale soit au niveau de la zone d'engrènement du tube de crémaillère 9 avec le pignon 7. Les portées sphériques des butées axiales 21 autorisent un déversement angulaire de l'entraîneur rotatif 20. La souplesse en flexion des supports allongés 23 autorise un mouvement transverse de l'entraîneur rotatif 20 ce qui, combiné au possible glissement des butées à aiguilles sur leurs plans de roulement respectifs, permet à l'entraîneur rotatif 20 de suivre sans contraintes excessives les mouvements et déformations du tube de crémaillère 9.

L'entraîneur rotatif 20 est ici entraîné en rotation au moyen d'un arbre 25 dont l'extrémité distale 26 comporte des cannelures bombées engagées dans un orifice cannelé creusé dans une paroi centrale de l'entraîneur rotatif 20. L'arbre 25 s'étend à l'intérieur de l'un des supports allongés 23 et comporte une extrémité proximale 27 solidarisée au rotor 28 d'un moteur électrique 29 s'étendant autour de l'un des demi-cylindres 10. La souplesse en flexion de l'arbre 25 et le rotulage permis par les cannelures bombées assurent une transmission de couple du moteur vers l'entraîneur rotatif sans générer de surcontrainte lors des déplacements de l'entraîneur rotatif 20.

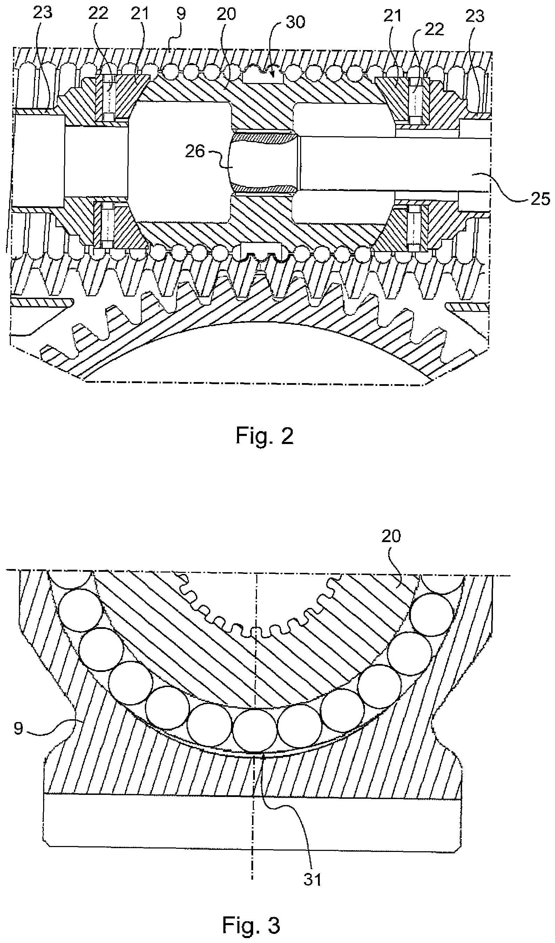

Selon un aspect particulier de l'invention plus particulièrement visible à la figure 2, un espace central 30 est ménagé à la périphérie de l'entraîneur rotatif 20 pour séparer deux ensembles de billes de part et d'autre de cet espace central. Cette disposition évite que des billes circulent au niveau de la zone d'engrènement et soient donc soumises à des contraintes importantes. Cet espace central pourra être mis à profit pour intégrer une réserve de graisse, par exemple en y intégrant un matériau poreux imbibé de graisse.

Selon une variante de réalisation illustrée à la figure 3, le chemin de billes ménagé dans le tube de crémaillère 9 comporte une portion 31 s'étendant en regard de la zone d'engrènement qui est creusée plus profondément que le reste du chemin de billes. Ainsi, la contrainte qui s'exerce sur la crémaillère lors de l'engrènement, et qui tend à comprimer localement cette dernière, peut être absorbée sans générer de surcontraintes dans les billes passant au niveau de la zone d'engrènement.

L'invention n'est pas limitée à ce qui vient d'être décrit, mais englobe au contraire toute variante entrant dans le cadre des revendications. En particulier, bien qu'ici l'entraînement en rotation de l'entraîneur rotatif soit assuré par un moteur électrique déporté s'étendant autour de l'un des demi-cylindres par l'intermédiaire d'un arbre à extrémité cannelée, on pourra utiliser d'autres modes d'entraînement déporté, comme un entraînement hydraulique. La transmission du couple peut se faire par un arbre comme illustré, mais également par un flexible. On pourra également utiliser un entraînement électrique local, par exemple directement intégré dans les supports allongés. Un réducteur pourra être interposé.

Bien qu'ici l'entraîneur rotatif soit positionné par deux supports allongés, on pourra n'utiliser qu'un seul support allongé, qui devra alors porter les deux butées axiales rotulaires en passant à l'intérieur de l'entraîneur rotatif.

Bien qu'ici, l'organe tournant de la commande d'orientation soit un tube monté tournant à l'intérieur du caisson de l'atterrisseur, l'organe tournant pourra également être un collier monté tournant autour du caisson de l'atterrisseur.

## Revendications

1. Atterrisseur comportant un caisson (2) dans lequel une tige (3) portant à sa partie inférieure une ou des roues est montée pour coulisser en étant libre de tourner autour d'un axe de pivotement (Z), l'atterrisseur comportant une commande d'orientation pour orienter sélectivement la ou les roues en faisant pivoter la tige coulissante, la commande d'orientation comportant un organe tournant (6) monté tournant sur le caisson qui comporte un secteur denté (7) formant pignon et qui est lié en rotation à la tige coulissante, ainsi qu'une crémaillère (8, 9) montée coulissante sur le caisson selon un axe de coulissement perpendiculaire à l'axe de pivotement pour engrener avec le pignon, la crémaillère étant déplacée par des moyens de déplacement, l'atterrisseur étant **caractérisé en ce que** les moyens de déplacement comportent un entraîneur rotatif (20) s'étendant à l'intérieur de la crémaillère pour tourner autour de l'axe de coulissement et coopérer par une liaison hélicoïdale avec la crémaillère, l'entraîneur rotatif étant arrêté axialement par deux butées axiales (21) opposées autorisant un déversement angulaire de l'entraîneur rotatif, les butées étant portées par au moins un support allongé (23) s'étendant à l'intérieur de la crémaillère et ayant une extrémité proximale fixée à une extrémité d'un cylindre (10) dans lequel coulisse la crémaillère.

2. Atterrisseur selon la revendication 1, dans lequel les butées axiales (21) comportent des portées sphériques coopérant avec l'entraîneur rotatif pour autoriser un rotulage de celui-ci.

3. Atterrisseur selon la revendication 1, dans lequel les butées axiales (21) sont associées à des butées à éléments roulants (22).

4. Atterrisseur selon la revendication 1, dans lequel les butées axiales sont portées par des supports allongés respectifs (23, 23) s'étendant de part et d'autre de l'entraîneur rotatif.

5. Atterrisseur selon la revendication 1, dans lequel les moyens de déplacement comportent un moteur déporté (29) qui entraîne l'entraîneur rotatif en rotation au moyen d'un arbre (25) qui s'étend à l'intérieur de la crémaillère.

6. Atterrisseur selon la revendication 5, dans lequel l'arbre (25) comporte une extrémité distale (26) portant des cannelures bombées qui coopèrent avec des cannelures homologues d'un orifice ménagé dans une paroi centrale de l'entraîneur rotatif.

7. Atterrisseur selon la revendication 5, dans lequel le moteur déporté est un moteur électrique (29) qui s'étend autour du cylindre dans lequel coulisse la crémaillère.

8. Atterrisseur selon la revendication 1, dans lequel la liaison hélicoïdale entre l'entraîneur rotatif et la crémaillère est une liaison du type à billes.

9. Atterrisseur selon la revendication 8, dans lequel l'entraîneur rotatif comporte un espace central (31) sur sa périphérie qui sépare deux ensembles de billes distincts de part et d'autre de l'espace central.

10. Atterrisseur selon la revendication 8, dans lequel la crémaillère comporte un chemin de billes comportant une portion (31) s'étendant en regard de la zone d'engrènement et qui est plus profondément creusée.

## Patentansprüche

1. Fahrwerk, umfassend einen Kasten (2), in dem eine Stange (3), die an ihrem unteren Teil ein oder mehrere Räder trägt, verschiebbar gelagert ist, während sie frei drehbar um eine Schwenkachse (Z) ist, wobei das Fahrwerk eine Ausrichtungssteuerung umfasst, um das oder die Räder selektiv auszurichten, indem die verschiebbare Stange verschwenkt wird, wobei die Ausrichtungssteuerung ein drehbar an dem Kasten gelagertes Drehelement (6) umfasst, das einen gezahnten Abschnitt (7) enthält, der ein Ritzel bildet und der drehfest mit der verschiebbaren Stange verbunden ist, sowie eine Zahnstange (8, 9), die an dem Kasten entlang einer Verschiebungsachse, die senkrecht zur Schwenkachse ist, verschiebbar gelagert ist, um mit dem Ritzel in Eingriff zu kommen, wobei die Zahnstange durch Verschiebungsmittel verschoben wird, wobei das Fahrwerk **dadurch gekennzeichnet ist, dass** die Verschiebungsmittel einen Drehmitnehmer (20) umfassen, der sich im Inneren der Zahnstange erstreckt, um sich um die Verschiebungsachse zu drehen und über eine Schraubverbindung mit der Zahnstange zusammenzuwirken, wobei der Drehmitnehmer axial von zwei entgegengesetzten axialen Anschlägen (21) gestoppt wird, die ein winkeliges Verkippen des Drehmitnehmers gestatten, wobei die Anschläge von mindestens einem länglichen Träger (23) getragen werden, der sich im Inneren der Zahnstange erstreckt und ein proximales Ende hat, das an einem Ende eines Zylinders (10) befestigt ist, in dem die Zahnstange gleitet.

2. Fahrwerk nach Anspruch 1, bei dem die axialen Anschläge (21) kugelförmige Auflageflächen umfassen, die mit dem Drehmitnehmer zusammenwirken, um eine Kugelgelenkbetrieb desselben zu gestatten.

3. Fahrwerk nach Anspruch 1, bei dem die axialen Anschläge (21) mit Anschlägen (22) mit Rollelementen in Verbindung stehen.

4. Fahrwerk nach Anspruch 1, bei dem die axialen Anschläge von jeweiligen länglichen Trägern (23, 23) getragen werden, die sich zu beiden Seiten des Drehmitnehmers erstrecken.

5. Fahrwerk nach Anspruch 1, bei dem die Verschiebungsmittel einen außermittigen Motor (29) umfassen, der den Drehmitnehmer mittels einer sich im Inneren der Zahnstange erstreckenden Welle (25) in Drehung antreibt.

6. Fahrwerk nach Anspruch 5, bei dem die Welle (25) ein distales Ende (26) umfasst, das gewölbte Rillen trägt, die mit homologen Rillen einer Öffnung zusammenwirken, die in einer zentralen Wand des Drehmitnehmers ausgebildet ist.

7. Fahrwerk nach Anspruch 5, bei dem der außermittige Motor ein Elektromotor (29) ist, der sich um den Zylinder erstreckt, in dem die Zahnstange gleitet.

8. Fahrwerk nach Anspruch 1, bei dem die Schraubverbindung zwischen dem Drehmitnehmer und der Zahnstange eine Kugelgewindeverbindung ist.

9. Fahrwerk nach Anspruch 8, bei dem der Drehmitnehmer auf seinem Umfang einen zentralen Raum (31) umfasst, der zwei verschiedene Kugelsätze zu beiden Seiten des zentralen Raums voneinander trennt.

10. Fahrwerk nach Anspruch 8, bei dem die Zahnstange eine Kugellaufbahn umfasst, die einen Abschnitt (31) hat, der sich gegenüber der Eingriffszone erstreckt und der tiefer ausgehöhlt ist.

## Claims

1. Undercarriage leg including a strut assembly (2) in which a rod (3) carrying in its lower portion one or more wheels is mounted to slide and free to turn about a pivot axis (Z), the undercarriage leg including an orientation control for selectively orienting the wheel or wheels by causing the sliding rod to pivot, the orientation control including a rotating member (6) rotatably mounted on the strut assembly that includes a toothed sector (7) forming a pinion and is rotationally coupled to the sliding rod, as well as a rack (8, 9) mounted to slide on the strut assembly along a sliding axis perpendicular to the pivot axis to mesh with the pinion, the rack being moved by drive means, the landing bear being **characterized in that** the drive means include a rotary drive (20) inside the rack adapted to turn about the sliding axis and to cooperate via a helicoidal coupling with the rack, the rotary drive being immobilized axially by two opposite axial thrust bearings (21) allowing angular tilting of the rotary drive, the thrust bearings being carried by at least one elongate support (23) inside the rack having a proximal end fixed to an end of a cylinder (10) in which the rack slides.

2. Undercarriage leg according to Claim 1, wherein the axial thrust bearings (21) include spherical bearing surfaces cooperating with the rotary drive to allow ball-joint type operation thereof.

3. Undercarriage leg according to Claim 1, wherein the axial thrust bearings (21) are associated with rolling member thrust bearings (22).

4. Undercarriage leg according to Claim 1, wherein the axial thrust bearings are carried by respective elongate supports (23, 23) on either side of the rotary drive.

5. Undercarriage leg according to Claim 1, wherein the drive means include a remotely located motor (29) that drives the rotary drive in rotation by means of a shaft (25) inside the rack.

6. Undercarriage leg according to Claim 5, wherein the shaft (25) has a distal end (26) carrying convex splines that cooperate with homologous splines of an orifice in a central wall of the rotary drive.

7. Undercarriage leg according to Claim 5, wherein the remotely located motor is an electric motor (29) around the cylinder in which the rack slides.

8. Undercarriage leg according to Claim 1, wherein the helicoidal coupling between the rotary drive and the rack is a recirculating ball screw type coupling.

9. Undercarriage leg according to Claim 8, wherein the rotary drive includes a central space (31) at its periphery that separates two distinct sets of balls on either side of the central space.

10. Undercarriage leg according to Claim 8, wherein the rack includes a ball race including a deepened portion (31) facing the meshing area.
